(19) **Europäisches Patentamt**

**European Patent Office**

**Office européen des brevets**

(11) **EP 0 732 230 B1**

(12) **EUROPÄISCHE PATENTSCHRIFT**

(45) Veröffentlichungstag und Bekanntmachung des Hinweises auf die Patenterteilung:
**23.06.1999 Patentblatt 1999/25**

(51) Int. Cl.[6]: **B60H 1/00**

(21) Anmeldenummer: **96101247.3**

(22) Anmeldetag: **30.01.1996**

(54) **Klimaanlage für Kraftfahrzeuge**

Air conditioning device for motor vehicles

Dispositif de climatisation pour véhicules automobiles

(84) Benannte Vertragsstaaten:
**DE ES FR IT**

(30) Priorität: **14.03.1995 DE 19509164**

(43) Veröffentlichungstag der Anmeldung:
**18.09.1996 Patentblatt 1996/38**

(73) Patentinhaber:
**Preh-Werke GmbH & Co. KG**
**97616 Bad Neustadt (DE)**

(72) Erfinder: **Rüttiger, Anton**
**D-97772 Wildflecken (DE)**

(74) Vertreter:
**Pfeiffer, Helmut, Dipl.-Ing.**
**Kennedydamm 17**
**40476 Düsseldorf (DE)**

(56) Entgegenhaltungen:
EP-A- 0 492 324        EP-A- 0 521 756
DE-A- 4 113 374        DE-A- 4 305 446

- PATENT ABSTRACTS OF JAPAN vol. 005, no. 158 (M-091), 12.Oktober 1981 & JP-A-56 086819 (NIPPON DENSO CO LTD), 15.Juli 1981,

## Beschreibung

Die Erfindung bezieht sich auf ein Regelaggregat für Fahrzeug-Klimaanlagen nach dem Oberbegriff des Patentanspruchs 1.

Es sind bereits Regelaggregate für Klimaanlagen für Kraftfahrzeuge bekannt, bei denen ein Sonnenstrahlsensor z. B. auf dem Fahrzeugdach, in direktem Einstrahlbereich montiert ist und die Fahrraumlufttemperatur in Abhängigkeit der gemessenen Sonnenstrahlen beeinflußt wird.

Die EP 0 521 756 zeigt eine Klimaanlage, bei der eine zu regelnde vorgegebene Fahrraumtemperatur durch weitere von Sensoren erfaßte Parameter beeinflußt werden soll, u.a. liegt ein Infrarotsensor vor, der die Sonnenstrahlung erfaßt.

Sensoren sowie Leitungsführung hierfür sind teuer und störanfällig.

In der DE 43 05 446 A1 ist ein Lichtsensor vorgesehen ist, der im Kraftfahrzeug so angeordnet ist, daß einmal die direkte Sonneneinstrahlung den Sensor erreicht und gleichzeitig indirektes Sonnenlicht, wobei dieser Lichtsensor gleichzeitig auch auf Signale eines Infrarotsenders reagiert zur Schaltung einer Alarmanlage, einer Zentralverriegelung oder dergleichen. Es werden keine Anregungen aufgezeigt, wie ein verringerter Sensoren- und Leitungsaufwand erreicht werden kann.

Hiervon ausgehend liegt der Erfindung die Aufgabe zugrunde, ein Regelaggregat für eine Fahrzeug-Klimaanlage nach dem Oberbegriff des Patentanspruchs 1 derart zugestalten, daß der Sonnenlichtsensor mit Leitungsführung entfallen kann.

Diese Aufgabe ist durch die im Kennzeichen des Patentanspruchs angegegebenen Merkmale gelöst worden. Vorteilhafte Weiterbildungen sind mit den Unteransprüchen angegeben.

Ein Ausführungsbeispiel der Erfindung ist in der Zeichnung dargestellt und wird nachfolgend beschrieben.

Diese zeigt:

Fig. 1
eine erfindungsgemäße Schaltung/Anordnung als Teil eines Regelaggregates,

Fig. 2
eine alternative Ausführung.

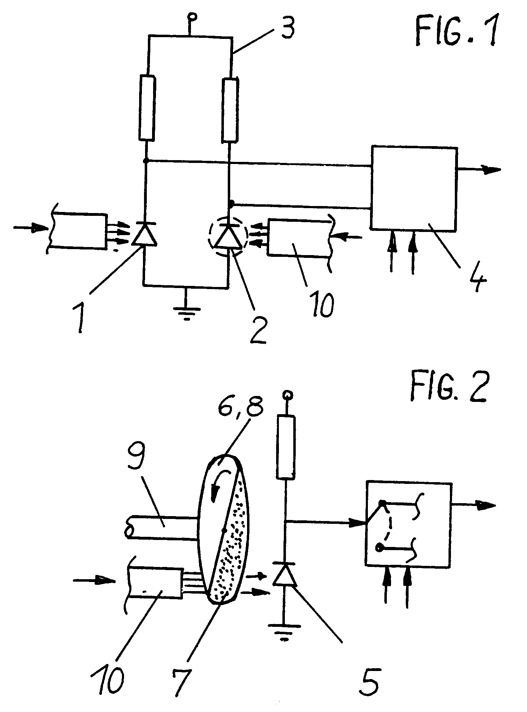

Fig. 1 zeigt schematisch eine erfindungsgemäße Schaltung/Anordnung als Teil eines Regelaggregates einer Klimaanlage für Kraftfahrzeuge mit einem Tageslichtsensor (Diode) 1 und einem Infrarotlichtsensor 2 (bestehend aus einer Diode und Filter), die über eine Schaltung 3 mit elektrischer Spannung beaufschlagt sind und der Tageslichthelligkeit und den Tageslichtinfrarotanteilen entsprechende Signale fortlaufend an ein elektronisches Steuergerät 4 ausgeben und nach Maßgabe von in diesem abgelegten Kennfeldern, Kennlinien und Betriebsprogrammen in bezug auf die eingestellte Fahrzeugraumtemperatur erhöhend oder erniedrigend einwirken.

Hierbei werden vorteilhafterweise die Sensorsignale aus dem Tageslicht (a) und aus dem Infrarotlicht (b) ins Verhältnis ($\frac{a}{b}$) gesetzt und das Ergebnis in Abhängigkeit vom Tageslichtsensorsignal (a) einem Kennfeld zur Feststellung eines Korrekturwertes eingegeben.

Die Dioden der Sensoren 1, 2 weisen Exemplarstreuungen auf. Es wird daher alternativ vorgeschlagen, daß die über der Tageslichtkennlinie erfaßten niedrigsten Infrarotlichtsensorsignale adaptiv erfaßt und als Kennlinie abgelagert werden, die als Kennlinie für Tageslicht ohne Sonnenbelastung gewertet wird, von der ausgehend aktuelle Sensorsignale quantitativ erfaßt und zu der Differenz zwischen Tageslichtkennlinie und niedrigster Infrarotlichtkennlinie ins Verhältnis gesetzt werden, wobei das Ergebnis in Abhängigkeit vom Tageslichtsensorsignal einem Kennfeld zur Feststellung eines Korrekturwertes eingegeben werden.

Es kann vorteilhaft sein, wenn die höchsten gemessenen Infrarotlichtsensorsignale in gleicher Weise erfaßt und als Kennlinie gespeichert werden, die als Kennlinie für Tageslicht mit höchster Sonnenbelastung gewertet wird. Damit wäre das aktuelle Sensorsignal zur Differenz zwischen höchster und niedrigster Infrarotlichtkennlinie ins Verhältnis zu setzen und davon abhängig ein Korrekturwert festzustellen.

Exemplarstreuungen sowie Unterschiede der Sensorsignale für unterschiedlich in Dekor und Farbe gestaltete Fahrzeuginnenräume wären damit kompensierbar.

Der ermittelte Korrekturwert kann ebenfalls durch Adaption in das Kennfeld eingelesen werden, beispielsweise durch Verstellen des Temperaturwählschalters durch den Fahrzeugbetreiber, der bei gegebener Sonnenbestrahlung die Fahrzeuginnenraumtemperatur seinem subjektiven Empfinden nach anders festlegt.

Es kann in einer alternativen Anordnung nach Fig. 2 vorgesehen sein, daß Tageslicht- und Infrarotlichtsignal von einem einzigen Tageslichtsensor 5 erzeugt werden, der mittels Phasenmessung mit und ohne Infrarotlichtfilter betrieben wird, wobei eine rotierende Filterscheibe 6 mit Filter- und Nichtfiltersegment 7, 8 zur Phasenschaltung verwendet wird, die, wie hier dargestellt, von einem Lüfterrad 9 angetrieben/gebildet wird.

Beide Ausführungen weisen Lichtleiter 10 auf, über die das Tageslicht dem Regelaggregat zugeführt wird. Somit kann dieses im Bereich des Fahrzeugarmaturenbrettes angeordnet sein.

Insgesamt liegt mit der erfindungsgemäßen Anlage eine preiswert zu erstellende Ausführung vor, die für Kraftfahrzeuge geeignet ist.

## Patentansprüche

1. Regelaggregat für Fahrzeug-Klimaanlagen mit automatisch in Abhängigkeit von der das Fahrzeug belastenden Sonneneinstrahlung erfolgenden Beeinflussung der vom Fahrzeugbetreiber eingestellten Fahrzeugraumtemperatur, wobei die Intensität der Sonneneinstrahlung aus der Tageslichthelligkeit und den Tageslichtinfrarotanteilen ermittelt wird, **dadurch gekennzeichnet, daß** Tageslichtsensoren mit und ohne IR-Filter verwendet werden, deren Ausgangssignale fortlaufend einem elektronischen Steuergerät zugeführt werden und nach Maßgabe von in diesem abgelegten Kennfeldern, Kennlinien und Betriebsprogrammen in bezug auf die eingestellte Fahrzeugraumtemperatur erhöhend oder erniedrigend einwirken.

2. Regelaggregat nach Anspruch 1, **dadurch gekennzeichnet,** daß die Sensorsignale aus dem Tageslicht (a) und aus dem Infrarotlicht (b) ins Verhältnis ($\frac{a}{b}$) gesetzt werden, wobei das Ergebnis in Abhängigkeit vom Tageslichtsensorsignal (a) einem Kennfeld zur Feststellung eines Korrekturwertes eingegeben wird.

3. Regelaggregat nach Anspruch 1, **dadurch gekennzeichnet**, daß die über der Tageslichtkennlinie erfaßten niedrigsten Infrarotlichtsensor-signale adaptiv erfaßt und als Kennlinie abgelagert werden, die als Kennlinie für Tageslicht ohne Sonnenbelastung gewertet wird, von der ausgehend aktuelle Sensorsignale quantitativ erfaßt und zu der Differenz zwischen Tageslichtkennlinie und niedrigster Infrarotlichtkennlinie ins Verhältnis gesetzt werden, wobei das Ergebnis in Abhängigkeit vom Tageslichtsensorsignal einem Kennfeld zur Feststellung eines Korrekturwertes eingegeben wird.

4. Regelaggregat nach Anspruch 1, **dadurch gekennzeichnet**, daß die über der Tageslichtkennlinie erfaßten niedrigsten und höchsten Infrarotlichtsensorsignale adaptiv erfaßt und als Kennlinien für Tageslicht mit niedrigster und höchster Sonnenbelastung gewertet werden, wobei von der niedrigsten Kennlinie ausgehend aktuelle Sensorsignale quantitativ erfaßt und zu der Differenz zwischen niedrigster und höchster Kennlinie gesetzt werden, wobei das Ergebnis in Abhängigkeit vom Tageslichtsensorsignal einem Kennfeld zur Feststellung eines Korrekturwertes eingegeben wird.

5. Regelaggregat nach Anspruch 3 oder 4, **dadurch gekennzeichnet**, daß der Korrekturwert durch Adaption in das Kennfeld eingelesen wird.

6. Regelaggregat nach einem der vorstehenden Ansprüche, **dadurch gekennzeichnet**, daß Tageslicht- und Infrarotlichtsignal von einem einzigen Tageslichtsensor (5) erzeugt werden, der mittels Phasenmessung mit und ohne Infrarotlichtfilter (7) betrieben wird.

7. Regelaggregat nach Anspruch 6, **dadurch gekennzeichnet**, daß eine rotierende Filterscheibe (6) mit Filter- und Nichtfiltersegment (7, 8) zur Phasenschaltung verwendet wird.

8. Regelaggregat nach Anspruch 6, **dadurch gekennzeichnet**, daß die Filterscheibe (6) von einem Lüfterrad (9) angetrieben/gebildet wird.

9. Regelaggregat nach einem der vorstehenden Ansprüche, **dadurch gekennzeichnet,** daß das Tageslicht dem oder den Sensoren (1, 2, 5) über Lichtleiter (10) zugeführt wird oder werden.

10. Regelaggregat nach Anspruch 9, **dadurch gekennzeichnet**, daß die Sensoren (1, 2, 5) in dem Regelaggregat integriert und dieses im Bereich des Fahrzeugarmaturenbretts angeordnet ist.

## Claims

1. Control unit for vehicle air conditioning systems with influencing of the vehicle-space temperature which is set by the vehicle operator taking place as a function of the insolation to which the vehicle is exposed, with the intensity of the insolation being established from the brightness of the daylight and the infrared portions of the daylight, characterised in that daylight sensors with and without IR filters are used, the output signals of which sensors are supplied continuously to an electronic control unit and, in accordance with engine characteristics maps, characteristic curves and operating programs stored therein, act in an increasing or reducing manner with respect to the vehicle-space temperature which is set.

2. Control unit according to claim 1, characterised in that the sensor signals from the daylight (a) and from the infrared light (b) are placed in the relationship ($\frac{a}{b}$), with the result being input into an engine characteristics map as a function of the daylight sensor signal (a) in order to establish a correction value.

3. Control unit according to claim 1, characterised in that the lowest infrared-light sensor signals determined by way of the daylight characteristic curve are determined adaptively and stored as a characteristic curve which is evaluated as a characteristic curve for daylight without exposure to sunlight, starting from which characteristic curve current sensor signals are determined quantitatively and placed in relation to the difference between the daylight characteristic curve and the lowest infrared-light characteristic curve, with the result being input into an engine characteristics map as a function of the daylight sensor signal in order to establish a correction value.

4. Control unit according to claim 1, characterised in that the lowest and highest infrared-light sensor signals determined by way of the daylight characteristic curve are determined adaptively and evaluated as characteristic curves for daylight with lowest and highest exposure to sunlight, with current sensor signals being determined quantitatively, starting from the lowest characteristic curve, and placed [in relation] to the difference between the lowest and highest characteristic curves, with the result being input into an engine characteristics map as a function of the daylight sensor signal in order to establish a correction value.

5. Control unit according to claim 3 or 4, characterised in that the correction value is read into the engine characteristics map by adaptation.

6. Control unit according to one of the preceding claims, characterised in that the daylight signal and infrared-light signal are generated by a single daylight sensor (5), which is operated by means of phase measurement with and without an infrared-light filter (7).

7. Control unit according to claim 6, characterised in that a rotating filter disc (6) having a filter segment (7) and a non-filter segment (8) is used for the phase switching.

8. Control unit according to claim 6, characterised in that the filter disc (6) is operated/formed by a fan impeller (9).

9. Control unit according to one of the preceding claims, characterised in that the daylight is supplied to the sensor or sensors (1, 2, 5) by way of optical waveguides (10).

10. Control unit according to claim 9, characterised in that the sensors (1, 2, 5) are integrated in the control unit and this is arranged in the region of the vehicle dashboard.

**Revendications**

1. Groupe de régulation pour installations de climatisation pour véhicules automobiles, avec influence, se faisant automatiquement en fonction de la charge de rayonnement solaire sur le véhicule, sur la température de l'habitacle du véhicule prescrite par le conducteur du véhicule, dans le cas duquel l'intensité du rayonnement solaire est déterminée à partir de la luminance de la lumière du jour et des composantes infrarouges de la lumière du jour, caractérisé par le fait que sont employés des détecteurs de lumière du jour, avec et sans filtre infrarouge, dont les signaux de sortie sont amenés en continu à un appareil de commande électronique et, en fonction des réseaux, caractéristiques et programmes d'exploitation mémorisés dans cet appareil, interviennent, en faisant croître et décroître la température prescrite de l'habitacle du véhicule.

2. Groupe de régulation selon la revendication 1, caractérisé par le fait que les signaux du détecteur provenant de la lumière du jour (a) et de la lumière infrarouge (b) sont pris en compte à proportion du rapport (a/b) le résultat étant en fonction du signal (a) du détecteur de lumière du jour, entré dans un réseau de caractéristiques pour déterminer une valeur correctrice.

3. Groupe de régulation selon la revendication 1, caractérisé par le fait que les signaux les plus bas du détecteur de lumière infrarouge saisis le long de la caractéristique de lumière du jour sont saisis de façon adaptative et mémorisés en tant que caractéristique traitée comme caractéristique pour la lumière du jour en l'absence d'une charge solaire, caractéristique en partant de laquelle des signaux réels du détecteur sont saisis quantitativement et pris en compte à proportion de la différence entre la caractéristique de lumière du jour et la caractéristique de lumière infrarouge la plus basse, le résultant étant, en fonction du signal du détecteur de lumière du jour, entré dans un réseau de caractéristiques pour déterminer une valeur correctrice.

4. Groupe de régulation selon la revendication 1, caractérisé par le fait que les signaux les plus bas et les plus hauts du détecteur de lumière infrarouge saisis le long de la caractéristique de lumière du jour sont saisis de façon adaptative et traités comme caractéristiques pour la lumière du jour dans le cas de la charge solaire la plus basse et la plus haute, étant précisé qu'en partant de la caractéristique la plus basse, des signaux réels du détecteur sont saisis quantitativement et pris en compte à proportion de la différence entre la caractéristique la plus basse et la caractéristique la plus haute, le résultant étant, en fonction du signal du détecteur de lumière du jour, entré dans un réseau de caractéristiques pour déterminer une valeur correctrice.

5. Groupe de régulation selon la revendication 3 ou 4, caractérisé par le fait que la valeur correctrice est lue par adaptation dans le réseau de caractéristiques.

6. Groupe de régulation selon l'une des revendications précédentes, caractérisé par le fait que le signal de lumière du jour et le signal de lumière infrarouge sont reproduits par un unique détecteur (5) de lumière du jour qui fonctionne au moyen d'une mesure de phase avec et sans filtre de lumière infrarouge (7).

7. Groupe de régulation selon la revendication 6, caractérise par le fait qu'est employé, pour la sélection de phase, un disque filtrant rotatif (6) avec segment filtrant et segment non filtrant (7, 8).

8. Groupe de régulation selon la revendication 6, caractérisé par le fait que le disque filtrant (6) est entraîné/est formé par une roue de ventilateur (9).

9. Groupe de régulation selon l'une des revendications précédentes, caractérisé par le fait que la lumière du jour est amenée au détecteur ou aux détecteurs (1, 2, 5) par l'intermédiaire de guides de la lumière (10).

10. Groupe de régulation selon la revendication 9, caractérisé par le fait que les détecteurs (1, 2, 5) sont intégrés dans le groupe de régulation et que celui-ci est disposé au voisinage du tableau de bord du véhicule.

FIG. 1

FIG. 2